# EUROPEAN PATENT SPECIFICATION

(11) **EP 2 709 807 B1**
(45) Date of publication and mention of the grant of the patent: **23.03.2016**
(21) Application number: 12721304.9
(22) Date of filing: 16.05.2012
(51) Int. Cl.: B26D 3/16, B26D 7/18, B65G 17/06

(54) **DEVICE AND METHOD FOR REMOVING TRIMS FROM A SERIES OF PRODUCTS SUCH AS ROLLS OR THE LIKE**
VORRICHTUNG SOWIE VERFAHREN ZUM ENTFERNEN VON ABFALLTEILEN VON EINER REIHE VON PRODUKTEN WIE ETWA ROLLEN ODER ÄHNLICHEM
DISPOSITIF ET PROCEDE PERMETTANT D'ELIMINER LES CHUTES DE SERIES DE PRODUITS, DU TYPE ROULEAUX OU ANALOGUES

(30) Priority: 17.05.2011 IT FI20110102
(43) Date of publication of application: 26.03.2014
(73) Proprietor: FABIO PERINI S.p.A., 55100 Lucca (IT)
(72) Inventor: MAZZACHERINI, Graziano, I-55016 Porcari (LU) (IT); MADDALENI, Romano, I-56031 Bientina (PI) (IT)
(74) Representative: Mannucci, Michele
(86) International application number: PCT/EP2012/059191
(87) International publication number: WO 2012/156477

(56) References cited:
- WO-A1-2005/056255
- GB-A- 2 137 918
- US-A- 4 171 738

## Description

### Technical Field

The present invention relates to improvements to devices and methods for removing leading and trailing trims or scraps obtained by cutting lengths of semi-finished articles to subdivide said articles into a plurality of products. In particular, but not exclusively, the present invention relates to devices and methods for the elimination of trims obtained by cutting rolls or logs of wound web material, typically paper and especially tissue paper, in order to obtain rolls of lesser axial length destined for end consumption.

### Background Art

The paper converting industry produces large-diameter reels of paper coming from a continuous production machine. These reels are unwound and rewound to form a plurality of logs or rolls with a diameter equivalent to that of the finished product and an axial length corresponding to the axial length of the source reel. The logs obtained in this manner must then be cut into smaller rolls of lesser axial length destined for final consumption. These cutting operations eliminate the leading and trailing trims or scraps from the log. Machines for cutting logs of wound web material are described in US-A-5799555 and in US-A-2006/0162522.

Various types of device have been designed to eliminate the leading and trailing trims or scraps produced when cutting logs. In particular, US-A-5475917 discloses a trim eliminating device comprising: a product advancement path; a first conveyor for advancing the products and trims; downstream of the first conveyor, a second conveyor for receiving the products; a trim discharge zone between the first conveyor and the second conveyor; a continuous flexible member with gripping elements that can be activated to transfer the products from the first conveyor to the second conveyor, arranged and designed to discharge the trims. The gripping elements of this known device consist of suction apertures arranged along the continuous flexible member. Suction is used to make the rolls adhere to the continuous flexible member, which acts as a conveyor or transporter for the rolls from the first input conveyor to the second output conveyor. The trims are eliminated due to the fact that the continuous flexible member is provided with zones devoid of suction holes or apertures, which are positioned in correspondence with the zone where the leading and trailing trims of the cut rolls are located. As a result, these trims are discharged in the discharge zone for possible recycling.

Although extremely efficient, this device has some drawbacks, including the need for a continuous flow of aspirated air to generate the vacuum inside a suction box along which the continuous flexible member provided with suction apertures moves.

WO 2005/056255 (US 2006/0124435) describes a trim eliminating device in which each row of rolls and leading and trailing trims formed by cutting a log is advanced between a fixed lower guide and an upper flexible member provided with roll supporting elements. The trims do not rest on the support elements but only on the lower fixed guide and therefore fall under the effect of gravity. A system for gripping the first and last rolls of each row, and for accelerating and decelerating the flexible member, allows the trims to fall and prevents them from remaining on the fixed guide by resting on the rolls adjacent to the trims. Therefore, this known system requires a fixed or substantially fixed guide, along which the rolls slide as they advance. The roll supporting elements, carried by the upper flexible member, do not grip the rolls, but rather form a supporting guide that, along with the fixed guide below, prevent them from falling. Only the end rolls of a series of rolls are mechanically gripped by the supporting elements.

### Summary of Invention

According to one aspect, the object of the present invention is to provide a device for the elimination of trims from series of rolls or other products obtained by cutting lengths of semi-finished articles, which has a simpler structure and is more economical to run.

Substantially, according to a first aspect, the invention provides a device for removing trims from series of products obtained by cutting elongated semi-finished articles, comprising a trim discharge zone and at least one continuous flexible member with gripping elements that can be activated to transfer said products beyond the trim discharge zone, wherein the gripping elements comprise deformable sheets carried by the continuous flexible member. The deformable sheets are arranged to grip the products and transfer them beyond the trim discharge zone. Furthermore, along the sides of the advancement path, contrasting surfaces are provided, which cause the deformation of the deformable sheets against the products so as to grip each of said products between opposed deformable sheets. Furthermore, at least one portion of the longitudinal length of the continuous flexible member or each continuous flexible member advantageously is devoid of deformable sheets, to allow trim discharge.

The deformable sheets therefore form gripping members that preferably advance at the same speed as the products, thus forming product gripping elements that can transfer all the products in a series beyond the discharge zone. In the discharge zone, there is no need to provide any guide or other lower fixed product supporting element, since they are held by the sheets. Compared to known art, this achieves a simpler system, with fewer components, and without requiring suction to operate correctly. This latter aspect is particularly useful, since it reduces the energy consumption of the device and the noise generated by the device during operation. Furthermore, compared to known devices, wherein the products rest on a stationary lower element, the sliding movement of the products on the stationary supporting element has been eliminated, a movement that can cause damage to the products, especially when they are made of particularly delicate material. The sheet driving mechanisms, which cause the sheets to close around the products, are very simple, reliable and low-cost.

When the device is used to handle rolls obtained by cutting logs, the trims are usually the leading and trailing trims that are generated at the two ends of each series of rolls obtained by cutting a log. However, the invention can also be used to eliminate trims in different positions along a series of products. In general, the device according to the invention can be used to eliminate trims, i.e. scraps that are found in defined, repetitive positions within a flow of products. For example, the device can be used to remove a defective intermediate product which is always in the same position within a flow of articles.

Advantageously, the device comprises an input conveyor and an output conveyor, the first of which infeeds series of products and trims, while the second receives and outfeeds a flow of products devoid of trims. Advantageously, an interruption or trim discharge zone is provided between the two conveyors. The continuous flexible member with the deformable product gripping sheets bridges the interruption zone between the two conveyors, and therefore transfers the products from one conveyor to the other, while the trims are caused to fall into the collection zone between the two conveyors.

In practice, the contrasting surfaces that cause the deformation of the deformable sheets are arranged on the outside of the deformable sheets and sideways thereof The path of advancement of the products and of the deformable sheets that hold them extends between the two contrasting surfaces. The deformable sheets are dragged and moved forward by the continuous flexible member and advance between the contrasting surfaces, being deformed thereby in such a way as to laterally grip the products to be transferred across the device, from one conveyor to the other.

In advantageous embodiments, pairs of opposed contrasting surfaces are provided for each continuous flexible member the device is fitted with, between which the deformable sheets advance.

In advantageous embodiments, the contrasting surfaces are stationary and the continuous flexible member advances the deformable sheets between the contrasting surfaces, sliding upon them. The form of the contrasting surfaces causes the contraction of said deformable sheets to grip the products.

In preferred embodiments of the invention, the deformable sheets are elastic and the form of the contrasting surfaces is such as to allow the elastic spreading of said sheets to release the products onto the output conveyor. In other embodiments, contrasting surfaces may be provided that are fitted with means for causing the spreading of flexible but non-elastic deformable sheets. For example, sliding surfaces may be provided that have a form that can exert on the deformable sheets also a widening and consequent spreading force, instead of only a contracting force.

In practice, in the product transfer zone from the input conveyor to the output conveyor, the deformable sheets protrude from their respective continuous flexible member forming, at least between the first and second conveyor, a product containment channel, which is open at the bottom and has a cross-section such that it can grip the products and prevent them falling due to gravity. In the output zone, the channel formed by the deformable sheets widens, releasing the products onto the output conveyor. In the input zone, the sheets are contracted once again, i.e. they are closed, reducing the cross-section of the channel, thus gripping the products to be transferred. The channel has an interruption in the zone where the trims are located, so that they are free to fall into the discharge zone.

The contrasting surfaces are located in a zone where the deformable sheets must perform their function of gripping the products. In the remaining part of the closed path of the continuous flexible member or each continuous flexible member, contrasting surfaces are not necessary. However, to enable the deformable sheets to be correctly contained and guided, in advantageous embodiments the contrasting surfaces are associated with guide and containment surfaces so as to provide lateral containment for the deformable sheets along the entire closed path defined by the continuous flexible member. This is particularly useful when the device comprises several parallel continuous flexible members, as in this case, in the absence of containment for the deformable sheets in the zone where they are inactive, deformable sheets associated with adjacent continuous flexible members could collide with one another.

Further advantageous features and embodiments are set forth in the attached claims, which form an integral part of the present description.

The invention also relates to a method for removing leading and trailing trims from series of products obtained by cutting elongated semi-finished articles, including the following steps:
- advancing a series of products with respective leading and/or trailing trims along a first conveyor;
- gripping the products, but not the trims, by means of a series of deformable sheets carried by at least one continuous flexible member extending above a trim discharge zone between said first conveyor and a second conveyor placed downstream of the first conveyor, by deforming said deformable sheets against said products by means of contrasting surfaces placed to the outside of said deformable sheets along the path of said at least one continuous flexible member;
- transferring said products to said second conveyor by spreading said deformable sheets.

### Brief Description of Drawings

The present invention will become more apparent from the following description reference being made to the accompanying drawings, which show a non-limiting embodiment thereof. More specifically, in the drawings:
Figures 1A-1D show a side view of an operational sequence of a device according to the invention;
Figure 2 shows an enlarged view of a portion of the product transfer system;
Figures 3A and 3B show a view according to III-III of Figure 2 of the device in two different configurations, for processing rolls having two different diameters;
Figures 4A and 4B show a section view according to IV-IV of Figure 2 in two different configurations;
Figure 5 shows a side view of the lower section of one of the flexible members of the roll transfer system, with the respective flexible sheets;
Figure 6 shows a section according to VI-VI of Figure 5; and
Figures 7 and 8 show two views similar to those shown in Figures 4A and 4B, in a different embodiment, Figure 8 showing only half of the device.

### Detailed Description of an Embodiment of the Invention

There follows a description of an embodiment of a device 2 for the removal of leading and trailing trims from series of rolls of wound web material obtained by cutting logs or rolls with an axial length approximately equal to a non-whole multiple of the length of the small rolls destined for final consumption, for example rolls of toilet paper, kitchen towels or the like. The length of the logs is approximately equal to a non-whole multiple of the lengths of the finished rolls, due to the presence of leading and trailing trims, which generally have a total length less than the length of a roll.

As indicated in the introductory part of the description, it must be understood that the concepts on which the invention is based can also be used in machines or devices for processing other types of articles, whenever trims or scraps in determined and repeated positions in successive series of products need to be eliminated from a flow of products.

According to an advantageous embodiment, the device 2 comprises a first conveyor 1 that advances, in the direction indicated by the arrow F1, series of rolls R obtained by cutting a log formed of a wound web material, subdivided into rolls R by a cutting machine upstream, not shown. Each series of rolls R has a leading trim RT and a trailing trim RC, which must be eliminated so that they do not enter the packaging line. In some embodiments, the conveyor 1 comprises one or more chains or other flexible members 3, to which pushers 5 are fixed which push the series of rolls R and trims RC and RT towards a trim discharge zone. As known to those skilled in the art, cutting machines for subdividing logs into rolls and trims can have one or more advancement channels for advancing more than one roll in parallel, in order to increase production. The number of flexible members 3 depends on the number of channels the upstream cutting machine is fitted with.

In some embodiments, each chain 3 on the conveyor 1 is associated with a roll sliding channel. In the embodiment illustrated, two parallel channels are provided, labeled 13A and 13B. Advantageously, the channels 13A, 13B have a longitudinal aperture along which the respective pusher 5 of the corresponding chain 3 moves.

Downstream of the first conveyor 1, with respect to the direction of advancement F of the rolls through the device 2, a second conveyor 7 is provided, which receives the rolls R and transfers them to a packaging zone, not illustrated.

Between the first conveyor 1 and the second conveyor 7 a trim discharge zone is arranged, indicated schematically by the number 9. The leading trims RT and trailing trims RC are collected in a container or, preferably, on an underlying conveyor belt 11, which transfers them to a disposal zone, for example so that they can subsequently be recycled.

Above conveyor 1 and conveyor 7 a transfer system 15 is provided for transferring the rolls R from conveyor 1 to conveyor 7, arranged and designed to eliminate the leading trims RT and trailing trims RC that fall into the discharge zone 9 onto the underlying conveyor 11 or into a collection container.

Advantageously, the transfer system 15 for each channel 13A, 13B of the conveyor 1 comprises a respective continuous flexible member 17A, 17B. Advantageously, each flexible member 17A, 17B moves around a pair of pulleys 19, 20.

Preferably, each continuous flexible member 17A, 17B comprises at least one belt, advantageously a toothed belt.

Preferably, at least one of the two pulleys 19, 20 is motorized. In some embodiments, for this purpose a motor M20, schematically indicated in the drawing, is provided, which is independent from the motors that drive conveyor 1 and conveyor 7. In the figures, a motor M1 for driving conveyor 1 and an separate motor M7 for driving conveyor 7 are schematically shown. This does not exclude the possibility of using a single motor to drive both conveyors 1, 7 and possibly the belt or belts forming the continuous flexible member 17A, 17B. In some embodiments, a common motor may be provided for driving the conveyors 1, 7 and an independent motor for driving the continuous flexible members 17A, 17B. In other embodiments, a common motor may be provided, associated with a correcting motor for changing the speed and timing of the movement of the various members 1, 7, 17A, 17B.

In currently preferred embodiments of the invention, the conveyor 15 is driven by a separate motor with respect to the motors that drive the other members on the device, to enable accelerations and decelerations for the correct handling of the rolls and trims. As will become apparent from the following description, it is in fact advisable that the last roll in each series be accelerated in order to be moved away from the trailing trim and the pusher 5 at the rear, thus allowing the pusher 5 to turn about the guide pulley of the conveyor 1 and thereby preventing the trailing trim from being pushed against the last roll of the series and adhering to it. Advantageously, in some embodiments, to allow this periodic acceleration the conveyor 15 has an overall length which is slightly greater than the distance between two consecutive pushers 5.

According to advantageous embodiments, deformable sheets 21A, 21B are fixed to each continuous flexible member 17A, 17B. In some embodiments, the sheets 21A, 21B are obtained from a single longitudinal strip of flexible material cut transversely with respect to the length of the respective continuous flexible member 17A, 17B. Two opposed deformable sheets are thus defined between consecutive transverse cuts, while at the same time maintaining a substantial degree of continuity in the laminar material the deformable sheets are made of. In other embodiments, deformable sheets 21A, 21B may be provided that are completely separate, side by side and fixed along the longitudinal length of the continuous flexible members 17A, 17B.

In advantageous embodiments, the deformable sheets 21A, 21B are flexible and elastic, for reasons that will become apparent below.

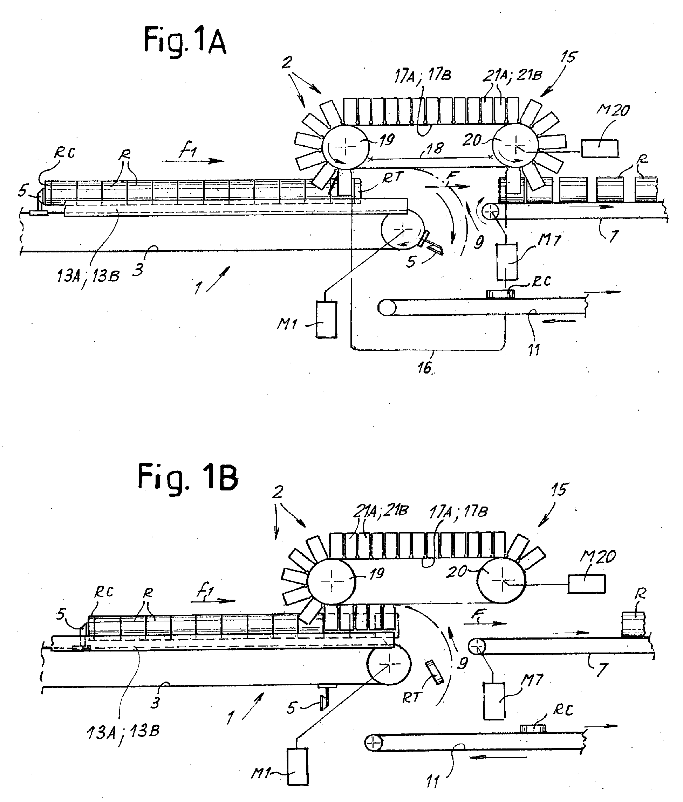

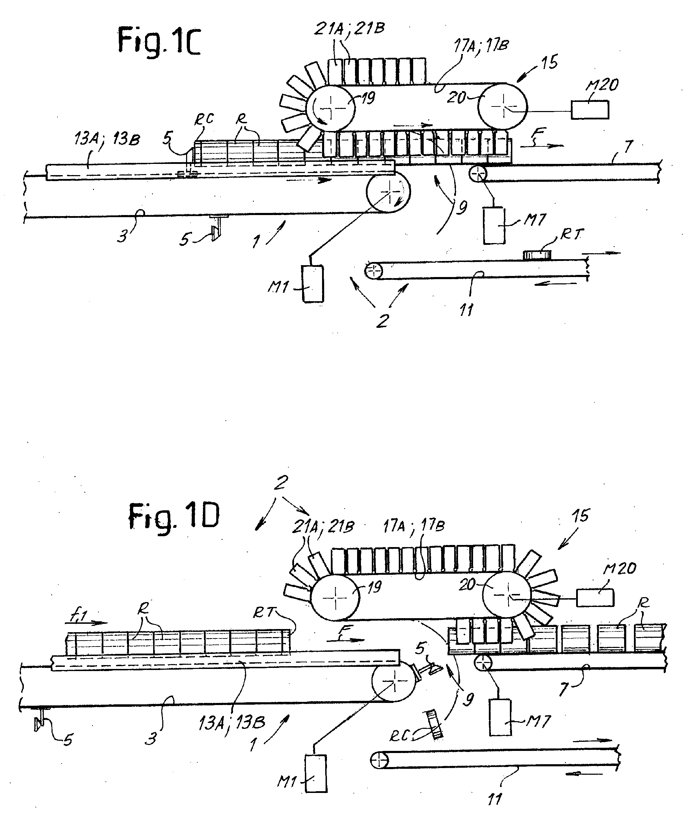

As can be seen in particular in Fig.1A, a zone indicated by the number 18 devoid of deformable sheets 21A, 21B is provided along the longitudinal length of each continuous flexible member 17A, 17B. Preferably, the overall length of each continuous flexible member 17A, 17B and the length of the portion 18 devoid of deformable sheets 21A, 21B are such that: the overall length of the continuous flexible member is equal to the overall length of the longest log (i.e. the series of rolls R complete with leading trims RT and trailing trims RC) that can be handled by the device 2, plus the reciprocal distance between the trailing trim RC of one series of rolls R and the leading trim RT of the subsequent series. The portion 18 devoid of deformable sheets 21A, 21B has an overall length equal to the length of the leading trim RT plus the length of the trailing trim RC and the reciprocal distance between the leading trim and trailing trim of two logs or subsequent series of rolls.

To the sides of each closed path defined by each continuous flexible member 17A, 17B two side elements are arranged, indicated by the number 23A for the continuous flexible member 17A and by the number 23B for the flexible member 17B. The two side elements are supported on cross members 25 fixed to a load-bearing structure schematically indicated by the number 27.

Each pair of side elements 23A, 23B is supported by pairs of arms 29A, 29B hinged at 31A and 31B to the respective cross members 25. The pairs of arms 29A, 29B can be adjusted to different angles by means of respective threaded bars 33A, 33B controlled by adjustment hand-wheels 35A, 35B. By turning the hand-wheels 35A, 35B it is therefore possible to change the reciprocal distance of the side elements 23A, 23A and 23B, 23B associated with each of the continuous flexible members 17A, 17B. As an alternative to the adjustment hand-wheels 35A, 35B, adjustment actuators may be used, for example electronically controlled electric motors, interfacing with a control unit. In this way, the device can be adapted to the sizes of the rolls by means of commands set by the operator using a control interface, such as a touch screen, keyboard or other device.

The top and ends of the side elements 23A, 23A and 23B, 23B are associated with guide and containment walls 37A, 37B for the deformable sheets 21A, 21B. The deformable sheets 21A, 21B slide along the inside of the opposed guide and containment walls 37A, 37B, the purpose of which is to keep the deformable sheets 21A, 21B partially folded in a U-shape. Since the deformable sheets 21A, 21B are preferably elastic, they tend to spread and press with their external surfaces against the opposed surfaces of the guide and containment walls 37A, 37B.

The reciprocal distance of the guide and containment walls 37A, 37B is adjusted by means of the hand-wheels 35A, 35B (or specific actuators) so that between said guide and containment walls 37A, 37B, the deformable sheets 21A, 21B have a reciprocal distance greater than the diameter of the rolls R that are to be handled by the device.

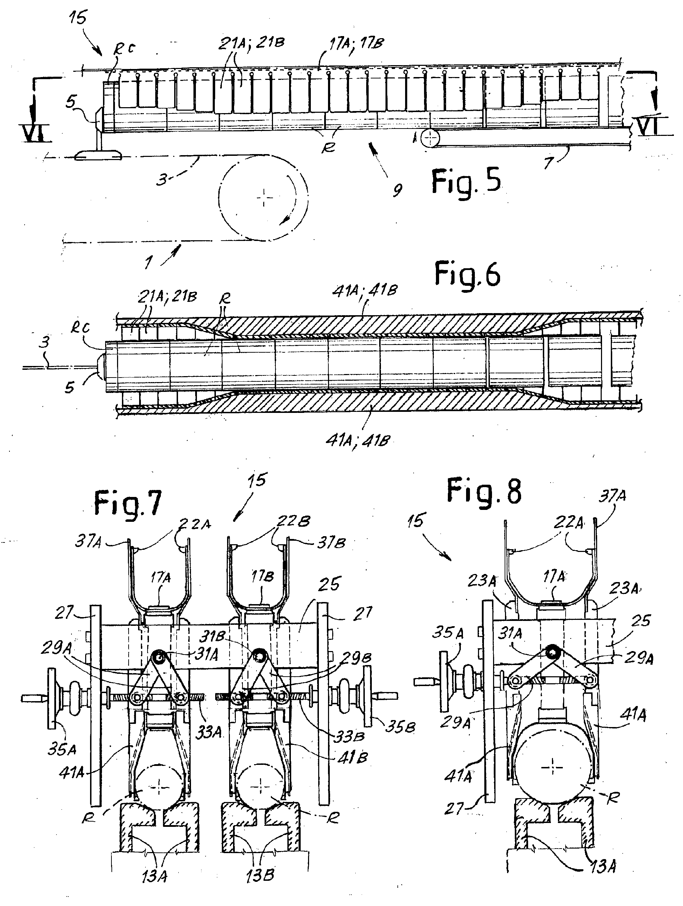

At the bottom, along the lower section of each continuous flexible member 17A, 17B, the respective side elements 23A, 23B carry contrasting surfaces indicated by the numbers 41A and 41B respectively, in place of the guide and containment walls 37A, 37B. The contrasting surfaces have a flared profile that, as can be seen in particular in Figure 6, causes the deformation and mutual approach of the opposed deformable sheets 21A, 21B when the latter, moving together with the continuous flexible members 17A, 17B, are inserted between the contrasting surfaces 41A, 41B.

In substance, as can be seen in particular in Figure 6, each contrasting surface 41A, 41B forms a cam profile that causes a gradual approaching of the opposed deformable sheets 21A, 21B associated with each continuous flexible member 17A, 17B when they advance in the direction of the arrow F along the bottom section of the respective continuous flexible member 17A, 17B. Due to the elastic deformability of the deformable sheets 21A, 21B, they tend to spread and take the form of the contrasting surfaces 41A, 41B in their most downstream zone, near the second conveyor 7.

As can be seen in the drawing, the continuous flexible members 17A, 17B are at a greater height than the conveyors 1 and 7 and partially overlap both the first conveyor 1 and the second conveyor 7, and form a system for transferring the rolls from one conveyor 1 to the other conveyor 7 passing over the trim removal zone 9. The roll advancement path therefore extends from conveyor 1 along the continuous flexible members 17A, 17B to conveyor 7.

In the zone at the end of the channels 13A, 13B associated with the first conveyor 1, guide bars 51 are provided, placed at an adjustable reciprocal distance, to keep the rolls R and trims RT, RC aligned when they are pushed by the pushers 5 of the conveyor 1 below the continuous flexible members 17A, 17B. These guide bars 51 end approximately where the initial portions of the contrasting surfaces 41A, 41B associate with each continuous flexible member 17A, 17B are arranged.

The device described above operates as follows.

A cutting machine upstream of the device, not shown, cuts each log or roll of wound web material, e.g. delivered by a rewinder, producing a series of rolls R with a leading trim RT and a trailing trim RC. The trims RT and RC must be removed from the flow of rolls R, which are fed to a packaging machine, not shown, placed downstream of the device subject of the present invention.

The series of rolls R and trims RT, RC are advanced in the direction of the arrow F1 at a feeding speed controlled advantageously by an independent motor M1. The trims RT, RC and the rolls R pushed by each pusher 5 are inserted between the guide bars 51 below the continuous flexible member 17A, 17B. In the example illustrated, as mentioned, the device 2 comprises two channels 13A, 13B for processing two series of rolls R and trims RC, RT in parallel. This does not exclude the possibility of using a single roll advancement channel or more than two roll advancement channels.

In some operating modes, the continuous flexible members 17A, 17B advance in the direction of the arrow F17 at a speed substantially equal to the feeding speed of the conveyor 1. Preferably, the continuous flexible members 17A, 17B advance at a speed slightly faster than the feeding speed of the rolls R, so as to create a space between them.

With the correct timing of the movements of conveyor 1 and of the continuous flexible members 17A, 17B, the position of the zone 18 devoid of deformable sheets 21A, 21B is synchronized with the position of the trailing trim RC of a series of rolls R and with the leading trim RT of the subsequent series of rolls R, such that the trailing trim RC, leading trim RT and the space between the trims RC and RT between two series of rolls are located in this zone 18. In this way, the advancement caused by the pushers 5 causes the discharge of the leading trims RT and the trailing trims RC in the discharge zone 9 between the end of the conveyor 1 and the start of the conveyor 7. Discharging is obtained due to the fact that no members are retaining the leading trims and trailing trims RT, RC.

Conversely, the rolls R advance under the continuous flexible members 17A, 17B in a manner synchronized with the movement of said continuous flexible members 17A, 17B, so that when the rolls R following the leading trim RT arrive below the pulley 19, they are brought side by side with the deformable sheets 21A, 21B of the continuous flexible members 17A, 17B. At the initial zone of the bottom section of the continuous flexible members 17A, 17B, corresponding to the guide bars 51, the deformable sheets 21A, 21B are still spread apart so as not to interfere with the rolls R, i.e. they are at a reciprocal distance greater than the diameter of the rolls. The guide bars 51 are positioned between the rolls R and the deformable sheets 21A, 21B. Advancing along the roll advancement path between the conveyor 1 and the continuous flexible members 17A, 17B, the deformable sheets 21A, 21B approach one another in a transversal direction with respect to the direction of advancement f17 of the respective flexible member 17A, 17B, due to the effect of the interaction between the deformable sheets 21A, 21B and the respective contrasting surfaces 41A, 41B which, as mentioned above, have a flared profile and therefore act as a sort of cam for reciprocally approaching the opposed deformable sheets 21A, 21B.

By effect of this reciprocal approaching of the opposed pairs of deformable sheets 21A, 21B, they come into contact with the side surfaces of the rolls R advancing under the continuous flexible members 17A, 17B and grip the rolls. The guide bars 51 end upstream of the zone where the deformable sheets 21A, 21B are pressed against the rolls R.

As a result, when the rolls reach the end of the conveyor 1, by means of the deformable sheets 21A, 21B they remain engaged to the respective flexible members 17A, 17B. The latter, advancing in the direction of the arrow f17, transfer the rolls R, gripped and held mechanically by the deformable sheets 21A, 21B, from the input conveyor 1 to the output conveyor 7.

Due to the shape of the contrasting surfaces 41A, 41B in the zone where the flexible members 17A, 17B and the second conveyor 7 overlap each other, and due to the elasticity of the deformable sheets 21A, 21B, the latter spread apart in this zone, thereby releasing the rolls R which are deposited onto the second conveyor 7 and are transferred thereby downstream for packaging purposes. The speed of the conveyor 7 may be greater than the speed of the flexible members 17A, 17B for further distancing the rolls R one from the other.

In substance, therefore, the gripping elements associated with the continuous flexible members 17A, 17B are constituted of a multiplicity of pairs of opposed deformable sheets 21A, 21B which are brought close together and pressed against the rolls R in the zone where the rolls must be held by the flexible members 17A, 17B and transferred from the conveyor 1 to the conveyor 7, moving beyond the trim (RT, RC) discharge zone.

The zone 18 of each continuous flexible member 17A, 17B devoid of deformable sheets 21A, 21B is in phase with the position of the leading trims and trailing trims RT, RC, so that these trims are not held by the flexible members 17A, 17B and can therefore be discharged in zone 9.

Figures 1A-1D show the sequence of removal of trailing and leading trims RC, RT and the advancement and transfer of the rolls R from the first conveyor 1 to the second conveyor 7 as described above. In detail, Figure 1A shows the moment at which a series of rolls R enters the zone where the rolls are gripped by the deformable sheets 21A, 21B below the guide pulleys 19 of the continuous flexible members 17A, 17B. As can be seen in this figure, the leading trim RT is more advanced than the first pair of deformable sheets 21A, 21B so as not to be gripped there by. Advancing in the direction indicated by the arrow F along the roll advancement path, the deformable sheets 21A, 21B close as a result of the interaction with the contrasting surfaces 41A, 41B, thus gripping the various rolls R, while the leading trim RT is pushed until it falls into the discharge zone 9 towards the conveyor 11. The rolls R gripped by the deformable sheets 21A, 21B are then transferred in the direction indicated by the arrow F from conveyor 1 to conveyor 7, onto which they are released. Figure 1D shows the final transfer phase of the series of rolls R, the last of which is gripped by the last deformable sheets 21A, 21B, while the trailing trim RC is downstream of the last pair of deformable sheets 21A, 21B, such that, when the pusher 5 turns around the axis of the chain guide pulley 3, the trailing trim RC, no longer supported by the channel below 13A, 13B and not gripped by the deformable sheets 21A, 21B, falls into the discharge zone 9 between conveyor 1 and conveyor 7. Continuing the advancing movement of the conveyor 1 and the continuous flexible members 17A, 17B, the device returns to the conditions shown in Figure 1A.

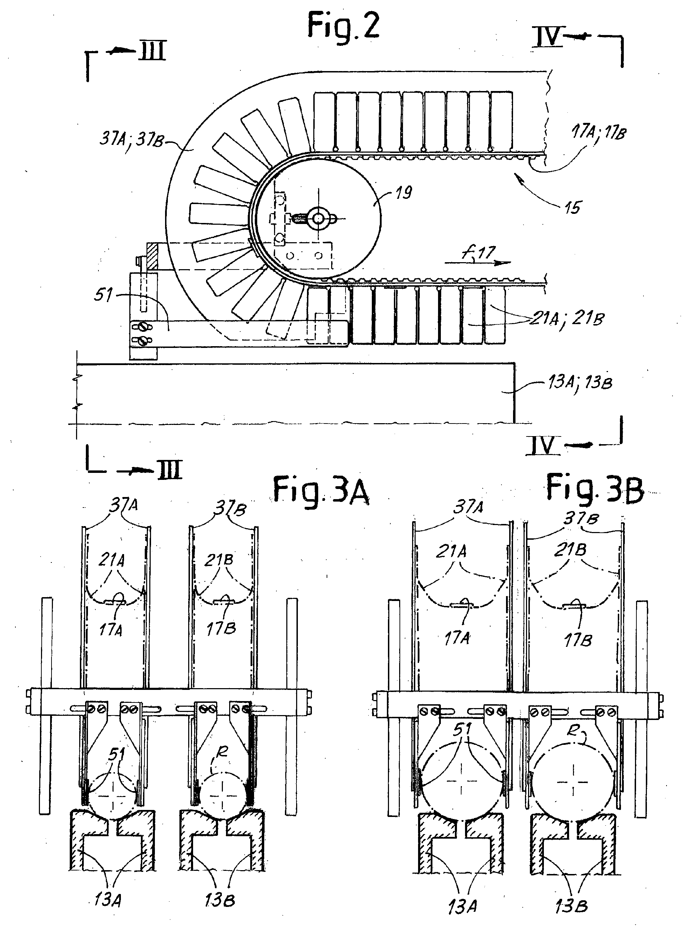

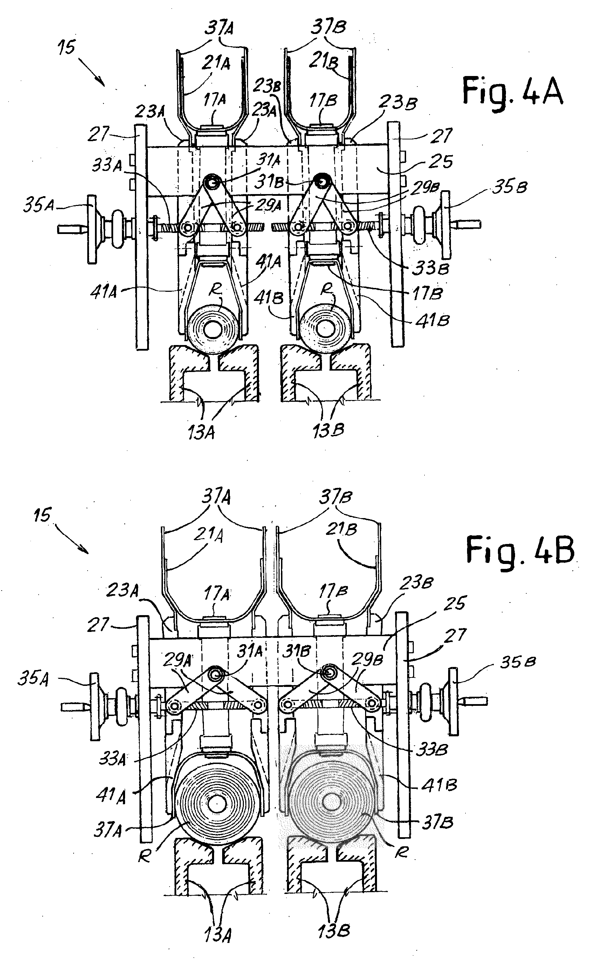

The possibility of adjusting the space between the side elements 23A, 23B allows the device 2 to be adapted to handle rolls R of variable diameters, as can be seen by comparing Figures 3A, 4A and 3B, 4B. This makes the device adaptable to process rolls of different diameters.

It is also possible to adjust the device 2 to process series of rolls R and trims RT, RC of lengths different from the design length, which corresponds to the overall length of the portion of continuous flexible members 17A, 17B provided with deformable sheets 21A, 21B. As mentioned above, this length is equal to the maximum length of the series of rolls that may be processed by the device, while the length of the portion 18 devoid of deformable sheets 21A, 21B is equal to the distance between the trailing trim RC of a series of rolls and the leading trim RT of the subsequent series.

When the device 2 has to process shorter series of rolls, it is sufficient to adjust the motor M20 driving the continuous flexible members 17A, 17B so as to synchronize the position of the portion 18 devoid of deformable sheets 21A, 21B with the position of the trailing trims and leading trims RC, RT from subsequent series of rolls R. In substance, when the series of rolls R, leading trim RT and trailing trim RC is shorter than the maximum permitted length, i.e. shorter than the length of the portion of flexible members 17A, 17B provided with deformable sheets 21A, 21B, it is sufficient to move these flexible members at a speed faster than the feed speed of the first conveyor 1 so that in each cycle, the portion 18 devoid of deformable sheets 21A, 21B is phased with the position of the trailing trim RC of one series of rolls R and with the leading trim RT of the subsequent series. Acceleration is followed by deceleration to bring the deformable sheets back into phase with the position of the rolls. This involves acceleration in the advancement of the rolls R along the advancement path in the direction indicated by the arrow F with respect to the advancement speed of the first conveyor 1. However, this does not lead to any drawback other than the reciprocal spacing of the rolls R, which can be corrected subsequently by controlling the speed of the conveyor 7 and/or downstream conveyors and machines (not illustrated).

In other embodiments, the device can be adapted to process series of rolls of different lengths by removing a sufficient number of deformable sheets 21A, 21B. To that end, these sheets may be designed as separate elements, i.e. each pair of opposed deformable sheets may be applied to or removed from the respective continuous flexible member 17A, 17B. In other embodiments, the central deformable sheets may be obtained by cutting a single strip of flexible material, which remains intact in the central part and forms opposed sheets by means of cuts at a right-angle to the respective continuous flexible member 17A, 17B. Only the end sheets, for example from one to ten deformable sheets at each end, may be removed individually to adapt the device to rolls of different lengths.

The two methods of adapting the device to handle series of rolls of variable lengths may be used either alternatively or may both be available on the same device. Preferably, the adjustment method based on speed control is used for minor adjustments, for example to correct a slight dimensional error in the length of a log with respect to the rated value for which the device has been adjusted. The removal of several deformable sheets is preferable for adjustments to deal with larger variations in the length of the log to be worked.

To obtain a sufficient grip between the deformable sheets 21A, 21B and the rolls R, to prevent the rolls from slipping and falling under their own weight into the trim removal zone 9, in one possible embodiment (see Figures 7, 8) the deformable sheets 21A, 21B are fitted at the distal ends with respective lips 22A, 22B. The length of the deformable sheets 21A, 21B is such that, when the sheets are brought close together, said lips 22A, 22B are positioned against the surface of the rolls R, at a height lower than the height of the axis of the rolls, thereby providing a sufficient mechanical grip on the rolls.

In other embodiments, the deformable sheets 21A, 21B are devoid of the lips 22A, 22B but have an inner lining of elastically yielding material, for example an expanded foam that, by effect of the pressure exerted by the contrasting surfaces 41A, 41B, is locally compressed to form depressions that embrace the rolls R at their widest diameter, thereby also in this case providing sufficient grip.

The deformable sheets 21A, 21B may be made of a material used for the construction of conveyor belts. In some embodiments, to increase the resistance to wear and to loss of elasticity, the elastic sheets 21A, 21B may be made of or reinforced by sheets of harmonic steel.

It is understood that the drawing only shows an example provided by way of a practical demonstration of the invention, which can vary in forms and arrangements without however departing from the scope of the concept underlying the invention. Any reference numbers in the appended claims are provided for the sole purpose of facilitating the reading of the claims with reference to the description and the drawing, and do not in any manner limit the scope of protection represented by the claims.

## Claims

1. A device for removing trims (RT; RC) from a series of products (R) obtained by cutting elongated semi-finished articles, comprising: a product (R) advancement path; a trim discharge zone (9) along said advancement path; at least one continuous flexible member (17A, 17B) with gripping elements that can be activated to transfer said products (R) beyond the trim discharge zone; **characterized in that**: said continuous flexible member (17A, 17B) is arranged above said product advancement path; said gripping elements comprise deformable sheets (21A, 21B) carried by said at least one continuous flexible member (17A, 17B), arranged so as to engage said products (R) and transfer them beyond said trim discharge zone; lateral to said advancement path, contrasting surfaces (41A, 41B) are provided, which cause the deformation of said deformable sheets (21A, 21B) against said products (R) to engage said products with said deformable sheets (21A, 21B); and that at least one portion (18) of the longitudinal length of said at least one continuous flexible member (17A, 17B) is devoid of said deformable sheets (21A, 21B).

2. Device according to claim 1, **characterized by** comprising: a first conveyor (1) for a advancing said products (R) and said trims (RC, RT); and, downstream of said first conveyor (1) along said product advancement path, a second conveyor (7) for receiving said products; said discharge zone being arranged between said first conveyor (1) and said second conveyor (7); said deformable sheets being arranged to transfer the products from the first conveyor (1) to the second conveyor (7); and said contrasting surfaces being arranged at least between said first conveyor (1) and said second conveyor.

3. Device according to claim 2, **characterized in that** said continuous flexible member (17A, 17B) and said deformable sheets (21A, 21B) are arranged and controlled such as to advance at the same speed as said products (R) along the product advancement path, the products of each series being retained by the deformable sheets (21A, 21B) during advancement between the first conveyor (1) and the second conveyor (7).

4. Device according to one or more of the preceding claims, **characterized in that** said contrasting surfaces (41A, 41B) are positioned on the outside of and lateral to said deformable sheets (21A, 21B) which, when dragged by said at least one continuous flexible member (17A, 17B), advance between the contrasting surfaces (41A, 41B).

5. Device according to one or more of the preceding claims, **characterized by** comprising, for each continuous flexible member (17A, 17B), a pair of said contrasting surfaces (41A, 41B) opposite one another, between which said deformable sheets (21A, 21B) advance.

6. Device according to one or more of the preceding claims, **characterized in that** said contrasting surfaces (41A, 41B) are stationary, said at least one continuous flexible member (17A, 17B) moving said deformable sheets (21A, 21B) between said contrasting surfaces (41A, 41B), the form of said contrasting surfaces (41A, 41B) causing the contraction of said deformable sheets (21A, 21B) to engage said products (R).

7. Device according to one or more of the previous claims, **characterized in that** said deformable sheets (21A, 21B) are elastic, the form of said contrasting surfaces (41A, 41B) being such as to allow the elastic spreading of said deformable sheets to release the products (R).

8. Device according to one or more of the previous claims, **characterized in that** said deformable sheets (21A, 21B) protrude from said at least one continuous flexible member (17A, 17B) to form, at least between said first conveyor (1) and said second conveyor (7), a channel for said products (R), and wherein said deformable sheets (21A, 21B) are preferably arranged in opposing pairs.

9. Device according to claim 9 or 10, **characterized in that** said channel has a variable transverse size due to the contraction of said deformable sheets (21A, 21B) against said products (R), to engage said products with said deformable sheets along said discharge zone (9) thereby preventing said products (R) from falling, and a widening of said deformable sheets (21A, 21B) to release said products onto the second conveyor (7).

10. Device according to one or more of the previous claims, **characterized in that** said contrasting surfaces (41A, 41B) are combined with guide and containment surfaces (37A, 37B) to provide lateral containment for said deformable sheets (21A, 21B) along the entire closed path delimited by said at least one continuous flexible member (17A, 17B).

11. Device according to claim 10, **characterized in that** between said first conveyor (1) and said second conveyor (7) said contrasting surfaces (41A, 41B) have a smaller reciprocal distance than the reciprocal distance of said guide and containment surfaces (37A, 37B) along the remaining part of the path of the continuous flexible member (17A, 17B).

12. Device according to one or more of the previous claims, **characterized in that** the reciprocal distance of said contrasting surfaces (41A, 41B) can be adjusted according to the transversal dimensions of the products.

13. Device according to one or more of the previous claims, **characterized in that** said at least one continuous flexible member (17A, 17B) is positioned at a greater height than said first conveyor (1) and said second conveyor (7); and that said at least one continuous flexible member (17A; 17B) overlaps an end section of the first conveyor (1) and a front section of the second conveyor (7); and wherein preferably said contrasting surfaces (41A, 41B) comprise respective converging portions in an overlapping section between said at least one continuous flexible member (17A, 17B) and said first conveyor (1), to cause the gradual approach of said deformable sheets (21A, 21B) to said products (R) fed by said first conveyor (1).

14. Device according to claim 13, **characterized in that** said contrasting surfaces (41A, 41B) comprise respective diverging portions at an overlapping section between said at least one continuous flexible member (17A, 17B) and said second conveyor (7), to cause the release of said products (P) from said deformable sheets (21A, 21B) onto said second conveyor (7).

15. Device according to one or more of the previous claims, **characterized in that** said at least one continuous flexible member (17A, 17B) is driven by a motor (M20) independent from a motor (M1) driving the first conveyor (1).

16. Device according to one or more of the previous claims, **characterized in that** said deformable sheets (21A, 21B) have lips (22A, 22B) for gripping the products (P), said lips (22A, 22B) being arranged at a distal end of said deformable sheets (21A, 21B), opposite a proximal end at which the deformable sheets (21A, 21B) are fixed to said at least one continuous flexible member (17A, 17B).

17. Device according to one or more of the previous claims, **characterized in that** said deformable sheets (21A, 21B) have a compressible inner lining for wrapping around said products, and/or at least some of said deformable sheets are removable, and/or a plurality of said deformable sheets are produced from a single strip of deformable material cut along transverse lines.

18. A method of removing trims from a series of products produced by cutting lengths of semi-finished articles, including the following steps:
- advancing along a first conveyor (1) a series of products (P) with respective leading and/or trailing trims (RT, RC);
- engaging said products by means of a series of deformable sheets (21A, 21B) carried by at least one continuous flexible member (17A, 17B) extending above a trim discharging zone (9) between said first conveyor (1) and a second conveyor (7) positioned downstream of the first conveyor (1), by deforming said deformable sheets (21A, 21B) against said products (R) by means of contrasting surfaces (41A, 41B) positioned on the outside of said deformable sheets (21A, 21B) along the path of said at least one continuous flexible member (17A, 17B), said trims not being engaged by said deformable sheets;
- transferring said products to said second conveyor (7) by spreading said deformable sheets (21A, 21B).

19. Method according to claim 18, wherein said deformable sheets engage said products and advance at the same speed as said products between said first conveyor and said second conveyor.

## Patentansprüche

1. Vorrichtung zum Entfernen von Verschnitt (RT; RC) von einer Reihe von Produkten (R), die durch Schneiden länglicher Halbfertigartikel erhalten wird, umfassend:
einen Vorschubweg für das Produkt (R); eine Verschnittauswurfzone (9) entlang des Vorschubweges;
wenigstens ein flexibles Endloselement (17A, 17B) mit Greifelementen, die aktiviert werden können, um die Produkte (R) über die Verschnittauswurfzone hinaus zu befördern; **dadurch gekennzeichnet, dass**: das flexible Endloselement (17A, 17B) oberhalb des Produktvorschubweges angeordnet ist; die Greifelemente verformbare Platten (21A, 21B) umfassen, die von dem mindestens einen flexiblen Endloselement (17A, 17B) getragen werden und die derart angeordnet sind, dass sie die Produkte (R) in Eingriff nehmen und diese über die Verschnittauswurfzone hinaus befördern; seitlich des Vorschubweges Gegenflächen (41A, 41B) vorgesehen sind, welche die Anformung der verformbaren Platten (21A, 21B) gegen die Produkte (R) bewirken, um die Artikel mit Hilfe der verformbaren Platten (21A, 21B) in Eingriff zu nehmen;
und dass mindestens ein Abschnitt (18) der Längsausdehnung des mindestens einen flexiblen Endloselements (17A, 17B) keine verformbaren Platten (21A, 21B) aufweist.

2. Vorrichtung nach Anspruch 1, **dadurch gekennzeichnet, dass** diese umfasst: eine erste Fördereinrichtung (1) zum Vorschub der Produkte (R) und des Verschnitts (RC, RT); und nachgeordnet der ersten Fördereinrichtung (1) entlang des Produktvorschubweges eine zweite Fördereinrichtung (7) zur Aufnahme der Produkte; wobei die Auswurfzone zwischen der ersten Fördereinrichtung (1) und der zweiten Fördereinrichtung (7) angeordnet ist; wobei die verformbaren Platten dafür eingerichtet sind, die Produkte von der ersten Fördereinrichtung (1) zu der zweiten Fördereinrichtung (7) zu übertragen; und wobei die Gegenflächen zumindest zwischen der ersten Fördereinrichtung (1) und der zweiten Fördereinrichtung angeordnet sind.

3. Vorrichtung nach Anspruch 2, **dadurch gekennzeichnet, dass** das flexible Endloselement (17A, 17B) und die verformbaren Platten (21A, 21B) derart eingerichtet sind und gesteuert werden, dass sie mit der gleichen Geschwindigkeit wie die Produkte (R) entlang des Produktvorschubweges vorbewegt werden, wobei die Produkte einer jeweiligen Reihe während der Vorwärtsbewegung zwischen der ersten Fördereinrichtung (1) und der zweiten Fördereinrichtung (7) von den verformbaren Platten (21A, 21B) gehalten werden.

4. Vorrichtung nach einem oder mehreren der vorhergehenden Ansprüche, **dadurch gekennzeichnet, dass** die Gegenflächen (41A, 41B) an der Außenseite und seitlich der verformbaren Platten (21A, 21B) angeordnet sind, welche zwischen den Gegenflächen (41A, 41B) vorbewegt werden, wenn sie durch das mindestens eine flexible Endloselement (17A, 17B) mitgeführt werden.

5. Vorrichtung nach einem oder mehreren der vorhergehenden Ansprüche, **dadurch gekennzeichnet, dass** diese für jedes flexible Endloselement (17A, 17B) zwei einander gegenüberliegende Gegenflächen (41A, 41B) umfasst, zwischen denen die verformbaren Platten (21A, 21B) vorbewegt werden.

6. Vorrichtung nach einem oder mehreren der vorhergehenden Ansprüche, **dadurch gekennzeichnet, dass** die Gegenflächen (41A, 41B) ortsfest angeordnet sind, wobei das mindestens eine flexible Endloselement (17A, 17B) die verformbaren Platten (21A, 21B) zwischen den Gegenflächen (41A, 41B) bewegt, wobei durch die Form der Gegenflächen (41A, 41B) ein Zusammendrücken der verformbaren Platten (21A, 21B) zur Ineingriffnahme der Produkte (R) bewirkt wird.

7. Vorrichtung nach einem oder mehreren der vorhergehenden Ansprüche, **dadurch gekennzeichnet, dass** die verformbaren Platten (21A, 21B) elastisch sind, wobei die Gegenflächen (41A, 41B) eine solche Form aufweisen, dass sie ein elastisches Aufspreizen der verformbaren Platten zur Freigabe der Produkte (R) ermöglichen.

8. Vorrichtung nach einem oder mehreren der vorhergehenden Ansprüche, **dadurch gekennzeichnet, dass** die verformbaren Platten (21A, 21B) von dem mindestens einen flexiblen Endloselement (17A, 17B) vorragen, so dass sie zumindest zwischen der ersten Fördereinrichtung (1) und der zweiten Fördereinrichtung (7) einen Kanal für die Produkte (R) bilden, und wobei die verformbaren Platten (21A, 21B) bevorzugt paarweise einander gegenüberliegend angeordnet sind.

9. Vorrichtung nach Anspruch 9 oder 10, **dadurch gekennzeichnet, dass** der Kanal eine variable Querabmessung aufweist, und zwar aufgrund des Zusammendrückens der verformbaren Platten (21A, 21B) gegen die Produkte (R), um die Produkte (R) entlang der Auswurfzone (9) mittels der verformbaren Platten in Eingriff zu nehmen, wodurch verhindert wird, dass die Produkte (R) herunterfallen, und aufgrund des Aufspreizens der verformbaren Platten (21A, 21B) zur Freigabe der Produkte auf die zweite Fördereinrichtung (7) .

10. Vorrichtung nach einem oder mehreren der vorhergehenden Ansprüche, **dadurch gekennzeichnet, dass** die Gegenflächen (41A, 41B) mit Führungs- und Einfassungsflächen (37A, 37B) kombiniert sind, um eine seitliche Einfassung für die verformbaren Platten (21A, 21B) entlang des gesamten geschlossenen Weges bereitzustellen, der durch das mindestens eine flexible Endloselement (17A, 17B) begrenzt ist.

11. Vorrichtung nach Anspruch 10, **dadurch gekennzeichnet, dass** die Gegenflächen (41A, 41B) zwischen der ersten Fördereinrichtung (1) und der zweiten Fördereinrichtung (7) einen kleineren Abstand zueinander aufweisen als der gegenseitige Abstand der Führungs- und Einfassungsflächen (37A, 37B) entlang des verbleibenden Teils des Weges des flexiblen Endloselements (17A, 17B).

12. Vorrichtung nach einem oder mehreren der vorhergehenden Ansprüche, **dadurch gekennzeichnet, dass** der Abstand der Gegenflächen (41A, 41B) zueinander entsprechend den Querabmessungen der Produkte angepasst werden kann.

13. Vorrichtung nach einem oder mehreren der vorhergehenden Ansprüche, **dadurch gekennzeichnet, dass** mindestens ein flexibles Endloselement (17A, 17B) in einer größeren Höhe positioniert ist als die erste Fördereinrichtung (1) und die zweite Fördereinrichtung (7); und dass das mindestens eine flexible Endloselement (17A; 17B) einen Endabschnitt der ersten Fördereinrichtung (1) und einen Anfangsabschnitt der zweiten Fördereinrichtung (7) überlappt; und wobei vorzugsweise die Gegenflächen (41A, 41B) jeweilige zusammenlaufende Abschnitte in einem überlappenden Abschnitt zwischen dem mindestens einen flexiblen Endloselement (17A, 17B) und der ersten Fördereinrichtung (1) aufweisen, um die allmähliche Annäherung der verformbaren Platten (21A, 21B) an die die auf der ersten Fördereinrichtung (1) zugeführten Produkte (R) zu bewirken.

14. Vorrichtung nach Anspruch 13, **dadurch gekennzeichnet, dass** die Gegenflächen (41A, 41B) jeweilige auseinanderlaufende Abschnitte an einem überlappenden Abschnitt zwischen dem mindestens einen flexiblen Endloselement (17A, 17B) und der zweiten Fördereinrichtung (7) aufweisen, um die Freigabe der Produkte (P) aus den verformbaren Platten (21A, 21B) auf die zweite Fördereinrichtung (7) zu bewirken.

15. Vorrichtung nach einem oder mehreren der vorhergehenden Ansprüche, **dadurch gekennzeichnet, dass** mindestens ein flexibles Endloselement (17A, 17B) durch einen Motor (M20) unabhängig von einem die erste Fördereinrichtung (1) antreibenden Motor (M1) angetrieben wird.

16. Vorrichtung nach einem oder mehreren der vorhergehenden Ansprüche, **dadurch gekennzeichnet, dass** die verformbaren Platten (21A, 21B) Lippen (22A, 22B) zum Ergreifen der Produkte (P) aufweisen, wobei die Lippen (22A, 22B) an einem distalen Ende der verformbaren Platten (21A, 21B) angeordnet sind, entgegengesetzt einem proximalen Ende, an dem die verformbaren Platten (21A, 21B) an dem mindestens einen flexiblen Endloselement (17A, 17B) befestigt sind.

17. Vorrichtung nach einem oder mehreren der vorhergehenden Ansprüche, **dadurch gekennzeichnet, dass** die verformbaren Platten (21A, 21B) eine zusammendrückbare innere Auskleidung zum Anlegen um die Produkte herum aufweisen, und/oder dass zumindest einige der verformbaren Platten entfernbar sind, und/oder dass eine Mehrzahl der verformbaren Platten aus einem einzigen Streifen aus verformbarem Material hergestellt sind, der entlang von Querlinien geschnitten wurde.

18. Verfahren zum Entfernen von Verschnitt von einer Reihe von Produkten, die durch Abschneiden von Stücken von Halbfertigartikeln hergestellt werden, mit folgenden Schritten:
- Vorbewegen einer Reihe von Produkten (P) mit jeweils einem vorderen und/oder einem hinteren Verschnitt (RT, RC) entlang einer ersten Fördereinrichtung (1);
- Ineingriffnehmen der Produkte mit Hilfe einer Reihe von verformbaren Platten (21A, 21B), die von mindestens einem flexiblen Endloselement (17A, 17B) getragen werden, das sich oberhalb einer Verschnittauswurfzone (9) zwischen der ersten Fördereinrichtung (1) und einer zweiten Fördereinrichtung (7) erstreckt, die nachgeordnet der ersten Fördereinrichtung (1) angeordnet ist, und zwar durch Anformung der verformbaren Platten (21A, 21B) gegen die Produkte (R) mit Hilfe von Gegenflächen (41A, 41B), die an der Außenseite der verformbaren Platten (21A, 21B) entlang des Weges des mindestens einen flexiblen Endloselements (17A, 17B) angeordnet sind, wobei der Verschnitt nicht durch die verformbaren Platten in Eingriff genommen wird;
- Übertragen der Produkte auf die zweite Fördereinrichtung (7) durch Aufspreizen der verformbaren Platten (21A, 21B).

19. Verfahren nach Anspruch 18, wobei die verformbaren Platten die Produkte mit der gleichen Geschwindigkeit wie die der Produkte in Eingriff nehmen und zwischen der ersten Fördereinrichtung und der zweiten Fördereinrichtung vorbewegen.

## Revendications

1. Un dispositif pour éliminer des chutes (RT ; RC) d'une série de produits (R) obtenues en coupant des objets allongés semi-finis, comprenant : un chemin d'avancement de produit (R) ; une zone de déchargement des chutes (9) s'étendant le long dudit chemin d'avancement ; au moins un organe continu flexible (17A, 17B) ayant des éléments de préhension qui peuvent être activés pour transférer lesdits produits (R) au-delà de la zone de déchargement de chutes ; **caractérisé en ce que** : ledit organe continu flexible (17A, 17B) est agencé au-dessus dudit chemin d'avancement de produit ; lesdits éléments de préhension comprennent des feuilles déformables (21A, 21B) portées par ledit organe continu flexible (17A, 17B), agencées de manière à venir en prise avec lesdits produits (R) et les transférer au-delà de ladite zone de déchargement ; latéralement par rapport audit chemin d'avancement, des surfaces opposées (41A, 41B) sont prévues, lesquelles provoquent la déformation desdites feuilles déformables (21A, 21B) contre lesdits produits (R) pour mettre en prise lesdits produits avec lesdites feuilles déformables (21A, 21B) ; et **en ce qu'**au moins une partie (18) du chemin longitudinal dudit organe continu flexible (17A, 17b) est dépourvu desdites feuilles déformables (21A, 21B).

2. Dispositif selon la revendication 1, **caractérisé en ce qu'**il comprend : une première bande transporteuse (1) pour faire avancer lesdits produits (R) et lesdites chutes (RC, RT) ; et, en aval de ladite première bande transporteuse (1), le long dudit chemin d'avancement, une seconde bande transporteuse (7) pour recevoir lesdits produits ; ladite zone de déchargement étant agencée entre ladite première bande transporteuse (1) et ladite seconde bande transporteuse (7) : lesdites feuilles déformables étant agencées pour transférer les produits de la première bande transporteuse (1) vers la seconde bande transporteuse (7) : et lesdits surfaces opposées étant agencées au moins entre ladite première bande transporteuse (1) et ladite seconde bande transporteuse.

3. Dispositif selon la revendication 2, **caractérisé en ce que** ledit organe continu flexible (17A, 17B) et lesdites feuilles déformables (21A, 21b) sont agencées et commandées de manière à avancer à la même vitesse que lesdits produits (R) le long du chemin d'avancement de produit, les produits de chaque série étant retenu par les feuilles déformables (21A, 21B) durant l'avancement entre la première bande transporteuse (1) et la seconde bande transporteuse (7).

4. Dispositif selon une ou plusieurs des revendications précédentes, **caractérisé en ce que** lesdites surfaces opposées (41A, 41B) sont positionnées à l'extérieur de et latéralement par rapport auxdites feuilles déformables (21A, 21B), lesquelles, lorsqu'elles sont entrainées par ledit organe continu flexible (17a, 17), avancent entre les surfaces opposées (41a, 41B).

5. Dispositif selon une ou plusieurs des revendications précédentes, **caractérisé en ce qu'**il comprend, pour chaque organe continu flexible (17A, 17B), une paire desdites surfaces opposées (41A, 41B) l'une en face de l'autre, entre lesquelles lesdites feuilles déformables (21A, 21B) avancent.

6. Dispositif selon une ou plusieurs des revendications précédentes, **caractérisé en ce que** lesdites surfaces opposées (41A, 41B) sont stationnaires, ledit ou lesdits organe(s) continu(s) flexible(s) (17A, 17B) mouvant lesdites feuilles déformables (21A, 21B) entre lesdites surfaces opposées (41A, 41B), la forme desdites surfaces opposées (41A, 41B) provoquant la contraction desdits feuilles déformables (21A, 21B) pour qu'elles viennent en prise avec lesdits produits (R).

7. Dispositif selon une ou plusieurs des revendications précédentes, **caractérisé en ce que** lesdites feuilles déformables (21A, 21B) sont élastiques, la forme desdits surfaces opposées (41A, 41B) étant telle qu'elle permet le déploiement élastique desdites feuilles déformables pour libérer les produits (R).

8. Dispositif selon une ou plusieurs des revendications précédentes, **caractérisé en ce que** lesdites feuilles déformables (21A, 21B) font saillie par rapport au(x)dit(s) organe(s) continu(s) flexible(s) (17A, 17B) pour former, au moins entre ladite première bande transporteuse (1) et ladite bande transporteuse (7), un canal pour lesdits produits (R) et dans lequel lesdites feuilles déformables (21A, 21B) sont de préférence agencées en paires opposées.

9. Dispositif selon la revendication 9 ou 10, **caractérisé en ce que** ledit canal a une taille transversale variable due à la contraction desdites feuilles déformables (21A, 21B) contre lesdits produits (R), pour mettre en prise lesdits produits avec lesdites feuilles déformables le long de ladite zone de déchargement (9) de manière à empêcher lesdits produits (R) de tomber, et un élargissement desdites feuilles déformables (21A, 21B) pour libérer lesdits produits sur ladite seconde bande transporteuse (7).

10. Dispositif selon une ou plusieurs des revendications précédentes, **caractérisé en ce que** lesdites surfaces opposées (41A, 41B) sont combinées avec des surfaces de guidage et de retenue (37A, 37B) pour former une retenue latérale pour lesdites feuilles déformables (21A, 21B) le long de tout le chemin fermé délimité par ledit ou lesdits organe(s) continu(s) flexible(s) (17A, 17B).

11. Dispositif selon la revendication 10, **caractérisé en ce qu'**entre ladite première bande transporteuse (1) et ladite seconde bande transporteuse (7), lesdites surfaces opposées (41A, 41B) ont une distance l'une par rapport à l'autre inférieure à la distance desdites surfaces de guidage et de retenue (37A, 37B) l'une par rapport à l'autre le long de la partie restante du chemin de l'organe continu flexible (17A, 17B).

12. Dispositif selon une ou plusieurs des revendications précédentes, **caractérisé en ce que** la distance des surfaces opposées (41A, 41B) l'une par rapport à l'autre peut être ajustée selon les dimensions transversales des produits.

13. Dispositif selon une ou plusieurs des revendications précédentes, **caractérisé en ce que** ledit organe continu flexible (17A, 17B) est positionné à une hauteur supérieure à celle de ladite première bande transporteuse (1) et ladite seconde bande transporteuse (7) ; et **en ce que** ledit organe continu flexible (17A, 17B) recouvre une section d'extrémité de la première bande transporteuse (1) et une section avant de ladite seconde bande transporteuse (7) ; et dans lequel de préférence lesdites surfaces opposées (41A, 41B) comprennent des parties convergentes respectives dans une section de recouvrement entre ledit organe continu flexible (17A, 17B) et ladite première bande transporteuse (1), pour provoquer l'approche graduelle desdites feuilles déformables (21A, 21B) vers lesdits produits (R) amenés par ladite première bande transporteuse (1).

14. Dispositif selon la revendication 13, **caractérisé en ce que** lesdites surfaces opposées (41A, 41B) comprennent des parties divergentes respectives dans une section de recouvrement entre ledit organe continu flexible (17A, 17B) et ladite seconde bande transporteuse (7), pour provoquer la libération desdits produits (P) desdites feuilles déformables (21A, 21B) sur ladite seconde bande transporteuse (7).

15. Dispositif selon une ou plusieurs des revendications précédentes, **caractérisé en ce que** ledit organe continu flexible (17A, 17B) est entraîné par un moteur (M20) indépendant d'un moteur (M1) entraînant la première bande transporteuse (1).

16. Dispositif selon une ou plusieurs des revendications précédentes, **caractérisé en ce que** lesdites feuilles déformables (21A, 21B) ont des lèvres (22A, 22B) pour saisir les produits (P), lesdites lèvres (22A, 22B) étant agencées à une extrémité distale desdites feuilles déformables (21A, 21B), à l'opposé de l'extrémité proximale au niveau de laquelle les feuilles déformables (21A, 21B) sont fixées audit organe continu flexible (17A, 17B).

17. Dispositif selon une ou plusieurs des revendications précédentes, **caractérisé en ce que** lesdites feuilles déformables (21A, 21B) ont un revêtement intérieur compressible pour envelopper lesdits produits, et/ou au moins certaines desdites feuilles déformables sont amovibles, et/ou une pluralité desdites feuilles déformables sont produites à partir d'une unique bande de matériau déformable coupée suivant des lignes transversales.

18. Un procédé de retrait de chutes d'une série de produits obtenues en coupant des longueurs d'objets semi-finis, comprenant les étapes suivantes :
- l'avancement le long d'une première bande transporteuse (1) d'une série de produits (P) avec des chutes avant et/ou des chutes arrières (RT, RC) ;
- la mise en prise desdits produits avec une série de feuilles déformables (21A, 21B) portées par au moins un organe continu flexible (17A, 17B) s'étendant au-dessus d'une zone de déchargement de chutes (9) entre ladite première bande transporteuse (1) et une seconde bande transporteuse (7) positionnée en aval de la première bande transporteuse (1), en déformant lesdites feuilles déformables (21A, 21B) contre lesdits produits (R) au moyen de surfaces opposées (41A, 41B) positionnées à l'extérieure desdites feuilles déformables (21A, 21B) le long du chemin dudit organe continu flexible (17A, 17B), lesdites chutes n'étant pas en prise avec lesdites feuilles déformables ;
- le transfert desdits produits vers ladite seconde bande transporteuse (7) en déployant lesdites feuilles déformables (21A, 21B).

19. Procédé selon la revendication 18, dans lequel lesdites feuilles déformables viennent en prise avec lesdits produits et avancent à la même vitesse que lesdits produits entre ladite première bande transporteuse et ladite seconde bande transporteuse.
